(19) **Europäisches Patentamt / European Patent Office / Office européen des brevets**

(11) **EP 3 814 850 B1**

(12) **FASCICULE DE BREVET EUROPEEN**

(45) Date de publication et mention de la délivrance du brevet:
**30.08.2023 Bulletin 2023/35**

(21) Numéro de dépôt: **19732543.4**

(22) Date de dépôt: **28.05.2019**

(51) Classification Internationale des Brevets (IPC):
**G03H 1/08** (2006.01)

(52) Classification Coopérative des Brevets (CPC):
**G03H 1/0808;** G03H 2210/30; G03H 2210/452

(86) Numéro de dépôt international:
**PCT/EP2019/063890**

(87) Numéro de publication internationale:
**WO 2020/001905 (02.01.2020 Gazette 2020/01)**

(54) **PROCÉDÉ DE GÉNÉRATION D'UN HOLOGRAMME NUMÉRIQUE, DISPOSITIF, SYSTÈME DE RESTITUTION HOLOGRAPHIQUE ET PROGRAMME D'ORDINATEUR ASSOCIÉS**

VERFAHREN ZUR ERZEUGUNG EINES DIGITALEN HOLOGRAMMS, ZUGEHÖRIGE VORRICHTUNG, HOLOGRAPHISCHES ANZEIGESYSTEM UND COMPUTERPROGRAMM

METHOD FOR GENERATING A DIGITAL HOLOGRAM, ASSOCIATED DEVICE, HOLOGRAPHIC DISPLAY SYSTEM AND COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2018 FR 1855901**

(43) Date de publication de la demande:
**05.05.2021 Bulletin 2021/18**

(73) Titulaire: **Fondation B-COM**
**35510 Cesson Sevigne (FR)**

(72) Inventeurs:
• **GILLES, Antonin**
**35000 RENNES (FR)**
• **GIOIA, Patrick**
**35530 SERVON SUR VILAINE (FR)**

(74) Mandataire: **Jacobacci Coralis Harle**
**32, rue de l'Arcade**
**75008 Paris (FR)**

(56) Documents cités:
**US-A1- 2016 231 706**

• YUSUKE SANDO ET AL: "Hidden surface removal of computer-generated holograms for arbitrary diffraction directions", APPLIED OPTICS, OPTICAL SOCIETY OF AMERICA, WASHINGTON, DC; US, vol. 52, no. 20, 1 juillet 2013 (2013-07-01), pages 4871-4876, XP001583479, ISSN: 0003-6935, DOI: HTTP://DX.DOI.ORG/10.1364/AO.52.004871
• ANTONIN GILLES ET AL: "Hybrid approach for fast occlusion processing in computer-generated hologram calculation", APPLIED OPTICS, vol. 55, no. 20, 10 juillet 2016 (2016-07-10), page 5459, XP055543661, WASHINGTON, DC; US ISSN: 0003-6935, DOI: 10.1364/AO.55.005459

**Description**

### 1. Domaine de l'invention

Le domaine de l'invention est celui de l'holographie numérique, en particulier de la génération d'un hologramme numérique à partir des informations géométriques d'une scène 3D.

L'invention concerne une méthode de calcul rapide d'un hologramme numérique et peut notamment, mais non exclusivement, s'appliquer à la restitution temps réel d'une scène 3D sur un visiocasque dans un contexte de réalité virtuelle ou augmentée.. Le visiocasque holographique immerge l'utilisateur dans un monde tridimensionnel virtuel superposé ou non à l'environnement réel, dans lequel il peut se déplacer librement. En fonction des mouvements et déplacements de l'utilisateur, l'hologramme affiché sur le visiocasque doit être recalculé en temps réel, nécessitant une grande puissance de calcul.

### 2. Présentation de l'art antérieur

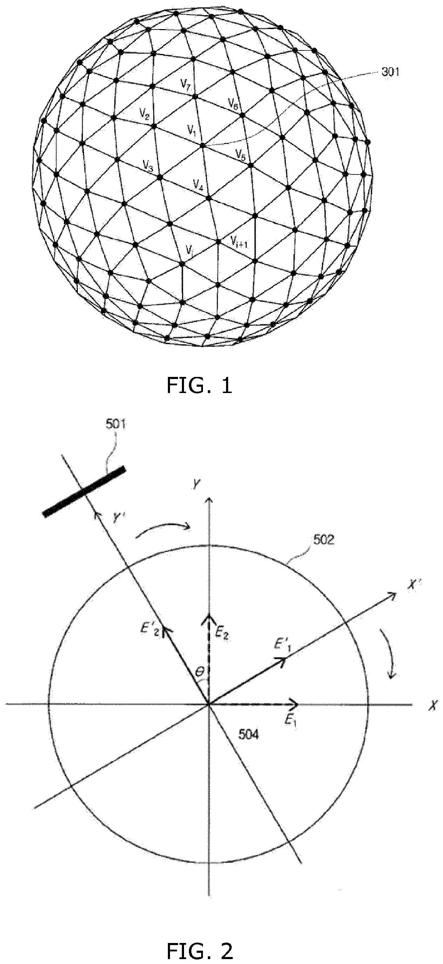

On connaît de la demande de brevet américain publiée sous le numéro US2016/0231706 A1 une méthode de génération d'un hologramme numérique à partir d'un spectre angulaire omnidirectionnel pré-calculé d'un objet d'une scène 3D. Les informations de description de la scène comprennent un maillage de l'objet. Comme illustré par la Figure **1**, le spectre angulaire omnidirectionnel de l'objet correspond à la décomposition en ondes planes du champ lumineux émis par l'objet. Chaque onde plane est représentée par un vecteur de coordonnées fréquentielles correspondant à sa direction de propagation et par une amplitude complexe. Selon cette méthode, le spectre angulaire du champ lumineux émis par l'objet est calculé sur la surface d'une sphère centrée sur cet objet. La surface de cette sphère est échantillonnée par subdivisions successives d'un icosaèdre régulier, un sommet du maillage icosaèdre étant associé à un vecteur de coordonnées fréquentielles du spectre.

Comme illustré par la Figure **2**, le plan de l'hologramme est perpendiculaire à un axe qui passe par le centre de la sphère. La position de ce plan est définie par un angle de rotation et par une distance au centre de la sphère.

Pour chaque point de l'objet, on considère un cône de visualisation centré sur une normale à la surface de ce point et dont l'angle est égal ou inférieur à un angle de diffraction maximum de l'hologramme, lui-même lié à la taille des pixels de l'hologramme et à la longueur d'onde. Les vecteurs de coordonnées fréquentielles inclus dans ce cône sont sélectionnés. Ils sont ensuite testés pour déterminer s'ils coupent un maillage de l'objet. Ceux qui n'intersectent pas l'objet, ne sont pas occultés donc servent à calculer un coefficient de Fourier du spectre angulaire du champ lumineux émis par l'objet. Les coefficients de Fourier obtenus pour chacune des mailles de l'objet sont accumulés pour former le spectre angulaire « omnidirectionnel ».

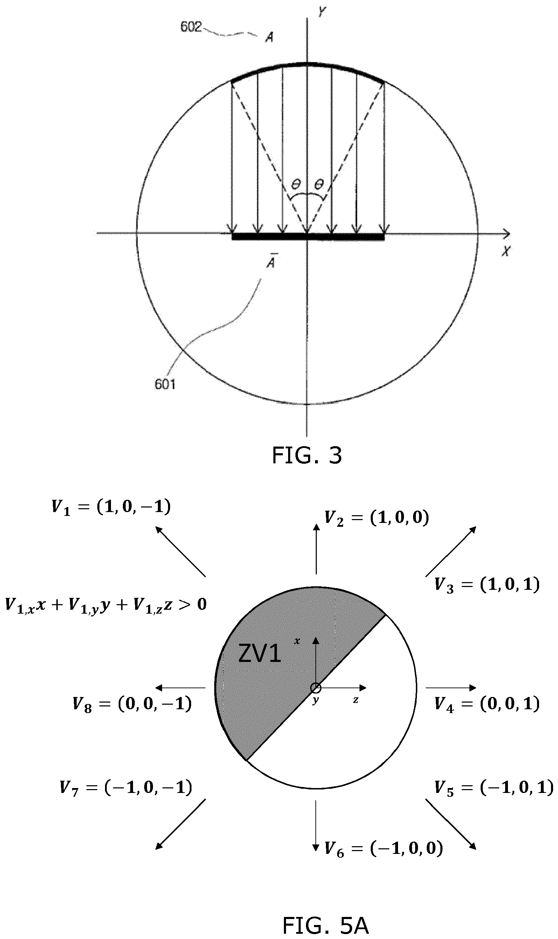

A partir de ce spectre angulaire, il est possible de dériver un hologramme situé dans un plan perpendiculaire à un axe passant par le centre de la sphère, tel que celui de la Figure **2,** dont la position angulaire et la distance au centre de la sphère sont connus. La connaissance de cette position angulaire du plan de l'hologramme est exploitée pour faire tourner le spectre angulaire omnidirectionnel vers le plan de l'hologramme et pour le convertir en un spectre planaire défini dans un plan tangent à la sphère et parallèle au plan de l'hologramme, tel qu'illustré par la Figure **3**. Le spectre angulaire planaire obtenu est ensuite propagé sur la distance qui le sépare du plan de l'hologramme le long d'un axe qui passe par le centre de la sphère. L'hologramme est généré par application d'une transformée de Fourier (inverse) au spectre propagé.

Un premier avantage de cette solution est qu'elle pré-calcule un spectre angulaire omnidirectionnel de l'objet de la scène, à partir duquel elle dérive en temps réel n'importe quel hologramme dont le plan est parallèle à une tangente de la sphère qui englobe l'objet.

Un deuxième avantage de cette solution est qu'elle gère les occultations de tout ou partie de l'objet depuis le point de vue de l'observateur, ce qui fait que l'hologramme généré offre une visualisation réaliste de la scène.

On connaît par ailleurs de l'article "Hidden surface removal of computer-generated holograms for arbitrary diffraction directions", de Yusuke Sando et al., Applied Optics, vol. 52, n° 20, pages 4871-4876, une méthode de calcul permettant le retrait de surfaces cachées dans un hologramme généré par ordinateur par sélection des rayons lumineux émis par diverses sources lumineuses ponctuelles représentant un objet tridimensionnel en fonction de leur position géométrique.

### 3. Inconvénients de l'art antérieur

Un premier inconvénient de la méthode proposée dans le document US2016/0231706 est qu'elle ne prévoit qu'un seul objet, ce qui limite ses possibilités d'usage.

Un deuxième inconvénient de cette méthode est que la gestion des occultations s'effectue à l'aide d'un test d'intersection entre chaque rayon lumineux et la géométrie de la scène, ce qui est extrêmement coûteux en temps de calcul.

Un troisième inconvénient de cette méthode est qu'elle calcule le spectre angulaire omnidirectionnel sur la surface d'une sphère échantillonnée par subdivisions successives d'un icosaèdre régulier. Pour dériver le spectre planaire de l'hologramme, l'extraction d'ondes planes à partir de cet échantillonnage nécessite l'utilisation d'un algorithme de parcours de graphe pour parcourir l'ensemble des sommets du maillage, ce qui est relativement complexe.

Un quatrième inconvénient de cette méthode est que le pré-calcul du spectre angulaire omnidirectionnel de la scène est dépendant de la taille des pixels de l'hologramme, ce qui empêche le spectre angulaire omnidirectionnel ainsi calculé d'être réutilisable pour des hologrammes présentant des dimensions et résolutions, donc des tailles de pixel différentes de celle initialement prévue.

Un cinquième inconvénient de cette méthode est qu'elle restreint les positions possibles du plan de l'hologramme, comme le montre l'équation 2 du document US2016/0231706, à une rotation dans un plan de la sphère et une translation selon un ces rayons. Elle ne permet donc pas de générer un hologramme dont l'axe optique n'est pas orienté vers le centre de l'objet.

## 4. Objectifs de l'invention

L'invention vient améliorer la situation.

L'invention a notamment pour objectif de pallier ces inconvénients de l'art antérieur.

Plus précisément, un objectif de l'invention est de proposer une solution qui soit moins complexe tout en garantissant la génération d'un hologramme qui offre une visualisation de qualité de la scène.

Un autre objectif de l'invention est de proposer une solution de génération d'un hologramme adaptée à la visualisation d'une scène comprenant plusieurs objets.

Encore un autre objectif de l'invention est de proposer une solution de génération d'un hologramme qui permette une visualisation de la scène depuis n'importe quelle position.

## 5. Exposé de l'invention

Ces objectifs, ainsi que d'autres qui apparaîtront par la suite, sont atteints à l'aide d'un procédé de génération d'un hologramme numérique représentatif d'une scène 3D, ladite scène comprenant au moins un objet, ledit objet étant défini par un ensemble de points et leur intensité associée, ledit procédé comprenant :

Par objet, une étape préalable de calcul d'un spectre angulaire « omnidirectionnel » du champ lumineux émis par l'objet à la surface d'un solide géométrique centré sur ledit objet, une surface dudit solide étant échantillonnée selon une grille prédéterminée, un échantillon de la grille étant associé à un vecteur de fréquences et à une amplitude correspondant à une somme de contributions au champ lumineux de points de l'objet selon une direction égale à celle du vecteur de fréquences ;

Pour la scène, les étapes suivantes :

- Obtention d'une pose d'un observateur;

- Dérivation d'un spectre angulaire de l'hologramme de la scène en fonction de la pose obtenue et à partir des spectres angulaires « omnidirectionnels » calculés par objet.

Selon l'invention, l'étape de calcul d'un spectre angulaire du champ lumineux par objet de la scène comprend, pour une pluralité de directions de visualisation prédéterminées, les sous-étapes suivantes :

- par direction de visualisation:

  ◦ Une détermination d'un sous-ensemble de points de l'objet, comprenant les points non occultés ;

  ◦ Un calcul d'un sous-spectre angulaire du champ lumineux émis par les points du sous-ensemble déterminé; et

- Une sommation sur la pluralité de directions angulaires prédéterminées des amplitudes des sous-spectres angulaires calculés, associées à un même échantillon de la grille.

L'invention s'appuie sur l'approche décrite dans l'art antérieur pour la génération d'hologrammes, qui consiste, à pré-calculer un spectre angulaire omnidirectionnel par objet d'une scène sur la surface d'un solide géométrique dont les échantillons sont associés à des vecteurs de fréquences du spectre et, sur réception d'une pose d'un observateur, de dériver des spectres calculés par objet un hologramme de la scène entière adapté à cette pose. En outre, pour le pré-calcul du spectre angulaire omnidirectionnel par objet, l'invention propose de façon tout-à-fait nouvelle et inventive, de ne gérer les occultations de façon exacte que pour un nombre limité de directions de visualisation de la scène. Pour chaque direction de visualisation, elle détermine un sous-ensemble des points de l'objet non occultés puis pré-calcule un sous-spectre angulaire du champ lumineux émis par les points de ce sous-ensemble. Le spectre angulaire émis par l'objet est ensuite obtenu par accumulation des contributions de chacun de ces sous spectres.

Contrairement à l'art antérieur qui gère les occultations de façon exacte par vecteur de fréquences associé à un échantillon de la surface d'une sphère, l'invention propose ainsi une approximation qui permet de rendre le procédé de génération d'un hologramme, en particulier l'étape de pré-calcul, moins complexe.

Le solide géométrique utilisé peut être de tout type, par exemple une sphère ou un solide géométrique à faces, tel qu'un cube ou un octaèdre.

Selon un aspect de l'invention, l'étape de détermination du sous-ensemble de points non occultés comprend les sous-étapes suivantes :

- Un rendu 2D+Z de l'objet par projection des points de l'objet selon la direction de visualisation et formation d'une image d'intensités et d'une carte de profondeurs des points projetés ; et

- La projection inverse des points de l'image d'intensité formée en des points de l'objet dans un repère de l'objet et calcul de leurs coordonnées en fonction de la carte de profondeur.

Selon ce mode de réalisation de l'invention, le sous-ensemble des points non occultés d'un objet pour une direction de visualisation donnée, est déterminé à l'aide d'une technique de rendu 2D+Z par projection sur une image d'intensités et une carte de profondeurs intermédiaires, suivie d'une projection inverse. Cette projection peut être par exemple perspective ou orthographique. Un avantage de cette approche est qu'elle est simple à mettre en oeuvre et que, contrairement à l'art antérieur, elle ne nécessite pas de connaître un modèle maillé de la scène 3D. Le sous-ensemble de points obtenu sert de base à l'invention pour pré-calculer le sous-spectre angulaire associé à la direction de visualisation.

Selon un autre aspect de l'invention, l'étape de calcul du sous-spectre angulaire comprend une sous-étape de détermination d'une zone de validité des occultations associées à une direction de visualisation sur la surface du solide géométrique et le calcul des amplitudes des échantillons est effectué pour les échantillons compris dans ladite zone.

Un avantage est de délimiter une zone à la surface du solide géométrique dans laquelle les occultations calculées pour une direction de visualisation donnée sont valides, afin de garantir la génération d'un hologramme de bonne qualité.

Selon encore un autre aspect de l'invention, les échantillons compris dans la zone de validité vérifient la condition suivante :

$$V_{j,x}x + V_{j,y}y + V_{j,z}z > 0$$

Où (x,y,z) désigne la position de l'échantillon et (Vj,x, Vj,y, Vj,z) la direction de visualisation (Vj) dans un repère (Ri) de l'objet (Obi).

Un avantage de cette condition particulière est qu'elle est simple à implémenter. En outre, la portion de la surface du solide géométrique considérée comme valide est incluse dans un cône centré sur la direction de visualisation (Vj).

Ce cône particulier présente un angle de 90 degrés par rapport à la direction de visualisation, ce qui permet de garantir un recouvrement des spectres angulaires directionnels, même pour un nombre de visualisations faible et donc d'éviter les « sauts » ou ruptures de continuité dans la visualisation de l'hologramme, lorsque la pose de l'observateur change et fait intervenir pour le calcul de l'hologramme, une autre direction de visualisation.

Selon un autre aspect de l'invention, le solide géométrique comprend une pluralité de faces planes et la grille prédéterminée est découpée en une pluralité de sous-grilles formant un quadrillage régulier, une sous-grille étant associée à une face du solide.

Un avantage d'une grille d'échantillonnage à quadrillage régulier est que le calcul du spectre angulaire de chaque objet est simplifié, car la grille prédéterminé ne comprend pas de subdivisions successives d'un icosaèdre régulier, ni ne nécessite l'utilisation d'un algorithme de parcours de graphe pour parcourir l'ensemble des sommets du maillage et calculer les amplitudes complexes des ondes planes associées aux échantillons. En outre, le stockage de ses échantillons et l'accès à leurs amplitude sont facilités.

Selon encore un autre aspect de l'invention, l'amplitude associée à un échantillon de la sous-grille d'une face du solide, pour le calcul du sous-spectre angulaire selon une dite direction de visualisation, est définie par la formule suivante :

$$A_{i,j}(x,y,z) = \sum_{k=1}^{M_x M_y} \sqrt{I_{i,j}(u_k, v_k)} \exp\left(-j\frac{2\pi}{\lambda}\left(f_x x_k + f_y y_k + f_z z_k\right)\right),$$

Avec Mx, My les dimensions des images d'intensité et de profondeur, $\lambda$ la longueur d'onde utilisée, et

$$\begin{pmatrix} f_x \\ f_y \\ f_z \end{pmatrix} = \frac{1}{\sqrt{x^2+y^2+z^2}} \begin{pmatrix} x \\ y \\ z \end{pmatrix}$$ les fréquences associées à l'échantillon (x,y,z).

Un avantage est que cette amplitude ne dépend pas de la résolution ni de la taille des pixels de l'hologramme à dériver. Le spectre angulaire obtenu par sommation des sous-spectres est donc utilisable pour générer un hologramme de dimensions quelconques.

Selon encore un autre aspect de l'invention, le solide géométrique est un cube.

Un avantage de ses faces carrées est qu'elles facilitent encore le stockage des échantillons du spectre angulaires et leur accès lors de l'étape de dérivation du spectre de l'hologramme. Il existe en effet des structures de mémoire de type « cube map » dédiées à ce format, et très performantes en termes de stockage.

Selon encore un autre aspect de l'invention, la pluralité de directions de visualisation comprend autant de directions que le solide compte de faces.

Un avantage de ce mode de réalisation est qu'il est simple à mettre en oeuvre tout en garantissant une répartition uniforme dans l'espace des directions de visualisation.

Selon un autre aspect de l'invention, l'étape de dérivation d'un spectre angulaire de l'hologramme de la scène comprend une dérivation d'un spectre angulaire d'un sous-hologramme par objet de la scène à partir du spectre angulaire dudit objet, une sommation des spectres angulaires des soushologrammes dérivés et l'application d'une transformée de Fourier inverse au spectre angulaire dérivé pour obtenir l'hologramme.

Un avantage de ce mode de réalisation est sa simplicité, parce que les spectres angulaires des objets de la scène sont gérés individuellement. Un autre avantage est qu'on peut très facilement manipuler les objets de la scène comme par exemple faire apparaître ou disparaître un objet de la scène, ou encore le déplacer dans la scène indépendamment des autres.

Selon encore un autre aspect de l'invention, le spectre angulaire de l'hologramme est dérivé à partir des spectres angulaires « multidirectionnels » calculés par objet selon la formule suivante :

$$\hat{H}(f_{h,x}, f_{h,y}) = \sum_{i=1}^{N} SA_i\left(\frac{f_x}{\lambda F}, \frac{f_y}{\lambda F}, \frac{f_z}{\lambda F}\right) \exp\left(j2\pi\left(s_x f_{h,x} + s_y f_{h,y} + s_z \sqrt{\lambda^{-2} - f_{h,x}^2 - f_{h,y}^2}\right)\right),$$

Où :

$\mathcal{R}_h = (O; \overrightarrow{x_h}, \overrightarrow{y_h}, \overrightarrow{z_h})$ désigne un repère local de l'hologramme dont l'origine est situé au centre de l'hologramme H, dont les axes définis par $\overrightarrow{x_h}$ et $\overrightarrow{y_h}$ coïncident avec l'axe horizontal et vertical de l'hologramme, respectivement, et dont l'axe défini par $\overrightarrow{z_h}$ coïncide avec l'axe optique de l'hologramme. On note $\overrightarrow{x_h} = \begin{pmatrix} x_{h0} \\ x_{h1} \\ x_{h2} \end{pmatrix}$, $\overrightarrow{y_h} = \begin{pmatrix} y_{h0} \\ y_{h1} \\ y_{h2} \end{pmatrix}$ et $\overrightarrow{z_h} = \begin{pmatrix} z_{h0} \\ z_{h1} \\ z_{h2} \end{pmatrix}$.

$$F = \max(f_x, f_y, f_z),$$

$$\begin{pmatrix} s_x \\ s_y \\ s_z \end{pmatrix} = \begin{bmatrix} x_{h0} & x_{h1} & x_{h2} \\ y_{h0} & y_{h1} & y_{h2} \\ z_{h0} & z_{h1} & z_{h2} \end{bmatrix} \begin{pmatrix} x_i - x_0 \\ y_i - y_0 \\ z_i - z_0 \end{pmatrix}$$ désigne la position du centre de l'objet *Obi* dans le repère $\mathcal{R}_h$ , et

$$\begin{pmatrix} f_x \\ f_y \\ f_z \end{pmatrix} = \begin{bmatrix} x_{h0} & y_{h0} & z_{h0} \\ x_{h1} & y_{h1} & z_{h1} \\ x_{h2} & y_{h2} & z_{h2} \end{bmatrix} \begin{pmatrix} f_{h,x} \\ f_{h,y} \\ \sqrt{\lambda^{-2} - f_{h,x}^2 - f_{h,y}^2} \end{pmatrix},$$

désignent les coordonnées fréquentielles du spectre angulaire de l'hologramme dans le repère (Ri) de l'objet Obi.

Un avantage de ce mode de réalisation est qu'il permet de générer un hologramme adapté à n'importe quelle pose de l'observateur.

L'invention concerne également un dispositif de génération d'un hologramme numérique adapté pour mettre en oeuvre le procédé de génération d'un hologramme numérique selon l'un quelconque des modes particuliers de réalisation définis ci-dessus.

Ce dispositif de génération d'un hologramme pourra bien sûr comporter les différentes caractéristiques relatives au procédé selon l'invention. Ainsi, les caractéristiques et avantages de ce dispositif sont les mêmes que ceux du procédé, et ne sont pas détaillés plus amplement.

Corrélativement, l'invention concerne aussi un système de restitution holographique comprenant un dispositif de génération d'un hologramme selon l'invention.

Selon un aspect de l'invention, ledit système comprend un visiocasque destiné à être porté sur la tête de l'observateur, ledit visiocasque comprenant un module de stockage adapté au stockage du spectre angulaire omnidirectionnel pré-calculé pour le au moins un objet de la scène.

Un avantage est que les spectres angulaires des objets étant stockés localement, le visiocasque peut dériver en temps réel un hologramme adapté à la pose de l'observateur.

L'invention concerne aussi un programme d'ordinateur comportant des instructions pour la mise en oeuvre des étapes d'un procédé de génération d'un hologramme numérique tel que décrit précédemment, lorsque ce programme est exécuté par un processeur.

Ce programme peut utiliser n'importe quel langage de programmation. Il peut être téléchargé depuis un réseau de communication et/ou enregistré sur un support lisible par ordinateur.

L'invention se rapporte enfin à un support d'enregistrement, lisible par un processeur, intégrés ou non au dispositif de génération d'un hologramme numérique selon l'invention, éventuellement amovible, mémorisant respectivement un programme d'ordinateur mettant en oeuvre un procédé de génération d'un hologramme numérique, tels que décrits précédemment.

## 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- les figures **1** à 3 déjà décrites illustrent de façon schématique une méthode de génération d'un hologramme à partir d'un spectre angulaire calculé sur une sphère, selon l'art antérieur ;

- la figure **4** présente de façon schématique les étapes d'un procédé de génération d'un hologramme numérique selon l'invention ;

- les figures **5A** à **5C** illustrent de façon schématique des exemples de solides géométriques vus en coupes et de direction de visualisation, mis en oeuvre par l'invention ;

- la figure **6** décrit de façon plus détaillée l'étape de pré-calcul d'un spectre angulaire du champ lumineux émis par un objet de la scène sur la surface d'un solide géométrique selon un mode de réalisation de l'invention;

- la Figure **7** illustre de façon schématique un exemple de rendu 2D+Z en projection perspective ou orthographique de l'objet Obi selon un mode de réalisation de l'invention ;

- la Figure **8** illustre de façon schématique l'étape de projection inverse des points de l'image d'intensités et de la carte de profondeurs d'un objet Obi d'une vue vj dans le repère monde, selon un mode de réalisation de l'invention ;

- la figure **9** illustre de façon schématique un exemple d'échantillonnage selon une grille régulière des faces d'un solide géométrique et de zone de validité pour le pré-calcul du spectre angulaire émis par un objet, selon un mode de réalisation de l'invention;

- la figure **10** illustre de façon plus détaillée l'étape de dérivation de l'hologramme à partir du spectre angulaire omnidirectionnel de chacun des objets de la scène, selon un mode de réalisation de l'invention ;

- La figure **11** illustre de façon schématique l'agencement d'un objet de la scène, d'un solide géométrique à faces centré sur l'objet et du plan de l'hologramme dans un repère monde, selon un mode de réalisation de l'invention ;

- les figures **12** et **13** illustrent de façon schématique des exemples de structures matérielles d'un dispositif de génération d'un hologramme numérique selon un mode de réalisation de l'invention.

## 7. Description d'un mode de réalisation particulier de l'invention

Le principe général de l'invention repose sur une étape de pré-calcul, dans laquelle le spectre angulaire omnidirectionnel émis par chaque objet de la scène est calculé sur la surface d'un solide géométrique échantillonnée selon une grille régulière. Le spectre angulaire omnidirectionnel correspond à la décomposition en ondes planes du champ lumineux émis par chaque objet. Chaque onde plane est représentée par un vecteur de coordonnées fréquentielles correspondant à sa direction de propagation et par son amplitude complexe. Lors de cette étape de pré-calcul, les occultations de la scène sont prises en compte pour un ensemble de directions prédéterminées. Selon l'invention, pour un objet donné, il est calculé autant de sous-spectres angulaires que de directions.

Les contributions de chacun des sous-spectres associés à la pluralité de direction angulaires sont ensuite cumulées pour former le spectre angulaire de l'objet

Sur réception d'une nouvelle pose d'un observateur U, l'invention dérive un hologramme dans un plan correspondant à cette pose, à partir du spectre angulaire pré-calculé par objet. Les hologrammes associés à chaque objet sont sommés pour former l'hologramme de la scène entière.

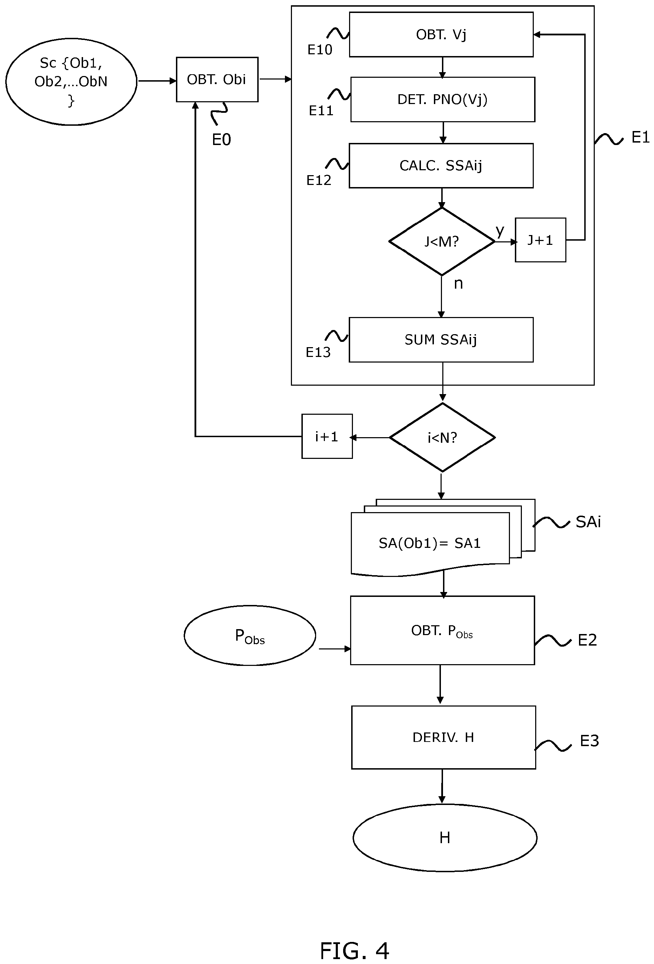

En relation avec la Figure **4**, on décrit un procédé de génération d'un hologramme d'une scène 3D comprenant plusieurs objets Ob1, Ob2, ... , ObN avec N entier non nul, selon un mode de réalisation de l'invention.

Dans la suite, on considère un repère monde Rm, en trois dimensions (3D), dans lequel on peut localiser un plan d'affichage d'un hologramme d'une scène 3D et un observateur U de l'hologramme.

On suppose que chaque objet de la scène est défini par un nuage de points associés à des intensités dans un repère 3D de l'objet, lui-même localisé dans le repère monde Rm. Bien sûr, l'invention n'est pas limitée à ce type de données représentatives de la scène et s'applique aussi bien par exemple à une représentation maillée de chaque objet. Dans ce cas, les points et leurs intensités associées sont obtenus à partir du maillage.

Selon l'invention, le procédé de génération d'un hologramme comprend les étapes suivantes :

- une étape E0 d'obtention d'un objet Obi parmi la pluralité d'objets que compte la scène ;

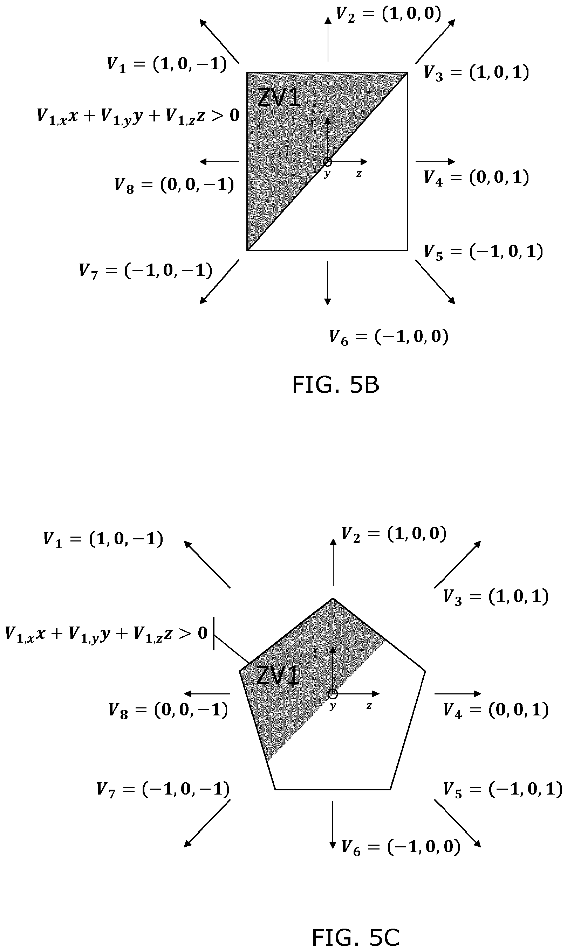

- Une étape préalable E1 de pré-calcul d'un spectre angulaire omnidirectionnel de l'objet Obi sur la surface d'un solide géométrique. Dans la suite de la description, on considère plusieurs exemples de solides. Selon un premier exemple illustré par la Figure **5A**, il s'agit d'une sphère. Selon un deuxième exemple illustré par la Figure **5B**, il s'agit d'un solide géométrique à faces, en particulier un cube. Selon un troisième exemple illustré par la Figure **5C**, il s'agit d'un prisme pentagonal. Bien sûr, l'invention n'est pas limitée à ces exemples et s'applique à tout type de solide géométrique, comprenant ou non des faces.

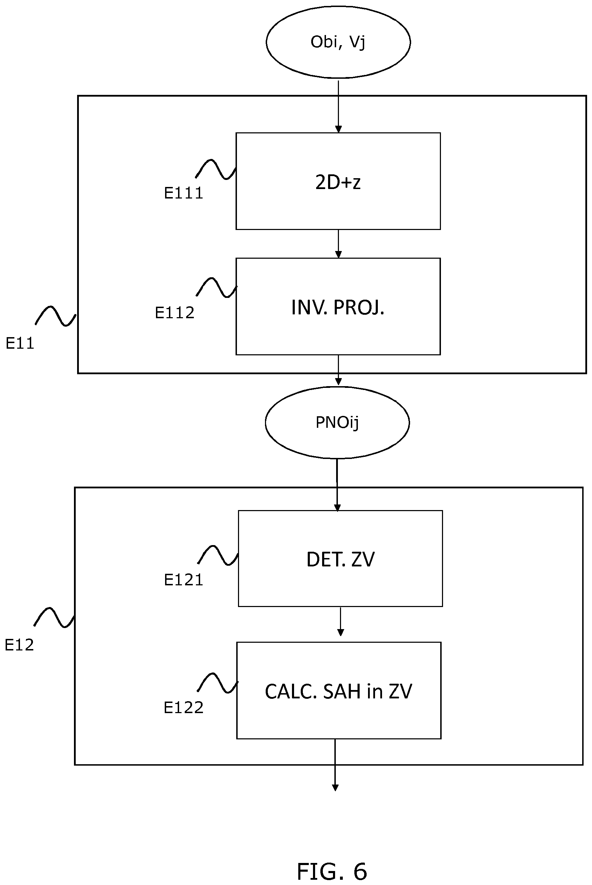

Le spectre angulaire omnidirectionnel correspond à la décomposition en ondes planes du champ lumineux émis par chaque objet Ob1, Ob2...ObN de la scène Sc. Chaque onde plane est représentée par une coordonnée fréquentielle 3D $\mathbf{f} = (f_x, f_y, f_z)$ correspondant à sa direction de propagation, et par son amplitude complexe. Lors de cette étape de pré-calcul, les occultations de la scène sont prises en compte de manière approximative, c'est-à-dire pour un nombre de points de vue limité, correspondant à un nombre de directions de visualisation. Cette étape E1 sera décrite plus en détails en relation avec la Figure **6**;

- Une étape E2 d'obtention d'une pose d'un observateur U. La pose comprend généralement 6 paramètres, 3 angles de rotation et 3 paramètres de translation. L'observateur U est par exemple un utilisateur d'un système de visualisation holographique près de l'œil (pour « near-eye holographic display), tel que des lunettes de réalité augmenté ou un casque de réalité virtuelle HMD (pour « Head Mounted Display », en anglais). Ce genre de dispositif est généralement associé à un système de réalité virtuelle comprenant un module de suivi positionnel du casque. Ce système peut s'appuyer par exemple sur une boule réfléchissante fixée sur le casque, cette boule étant repérable à l'aide d'une technologie infra-rouge, ou encore sur un capteur inertiel et magnétique. Les informations de suivi positionnel et orientationnel sont transmises au casque ou à un dispositif du système de réalité virtuelle apte à mettre en oeuvre le procédé selon l'invention.

A partir de la connaissance de cette pose, on dérive immédiatement une position $P_H$ du plan de l'hologramme dans le repère monde Rm, liée à une fenêtre de visualisation du dispositif HMD;

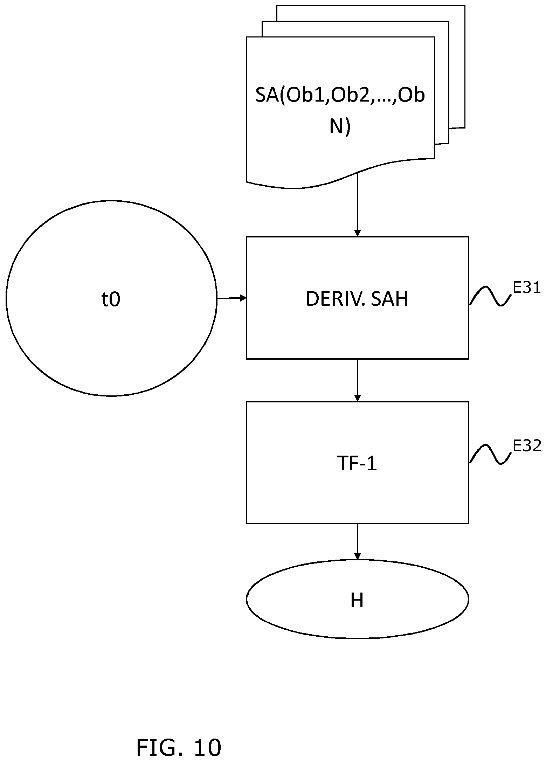

- Une étape E3 de dérivation de l'hologramme à la volée à partir des spectres angulaires omnidirectionnels précalculés pour chaque objet de la scène et de la pose obtenue. Le temps de calcul de cette étape ne dépend que de la résolution de l'hologramme et pas de la complexité ou de l'échantillonnage de la scène, ce qui permet de maintenir une fréquence d'images (pour « framerate », en anglais) constante tout en assurant une bonne qualité visuelle. Cette étape va être détaillée dans la suite en relation avec la Figure **10**.

En relation avec les Figures **4** et **6**, on détaille maintenant l'étape E1 de pré-calcul d'un spectre angulaire du champ émis par l'objet Obi selon un mode de réalisation de l'invention.

Pour chaque objet Obi, avec $i \in \{1..N\}$, de la scène, on définit un nombre $M \in \mathbb{N}$ de directions de visualisation $V_j \in \mathbb{R}^3$ (avec $j \in \{1..M\}$), avec M non nul supérieur ou égal à 2, associées à une vue vj. Pour chacune de ces directions de visualisation, les occultations seront calculées de façon exacte.

En E10, on obtient une direction de visualisation Vj.

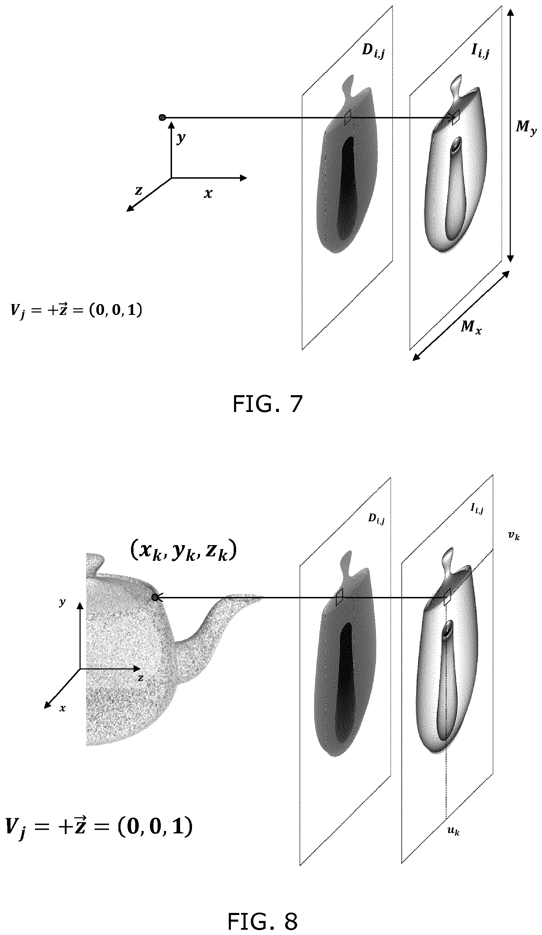

En E11, pour la direction de visualisation $v_j$, on détermine un ensemble de points de l'objet Obi qui ne sont pas occultés. Pour ce faire, selon ce mode de réalisation, un rendu 2D+Z en projection perspective ou orthographique de l'objet i est effectué en E111, comme illustré par la Figure **7**. Pour cela, on utilise la matrice de projection 3x4 en coordonnées homogènes donnée par

$$MP_j = K \begin{bmatrix} R_j & -R_j t_j \\ 0^T & 1 \end{bmatrix},$$

avec $R_j$ la matrice de rotation 3x3 et $t_j$ le vecteur de translation de taille 3 correspondant au point de vue $j$, et $K$ la matrice de projection 3x4 perspective ou orthographique de la caméra, donnée par

$$K = \begin{bmatrix} 1/\Delta & 0 & 0 & M_x/2 \\ 0 & 1/\Delta & 0 & M_y/2 \\ 0 & 0 & 0 & 1 \end{bmatrix}$$

si la projection est orthographique, et par

$$K = \begin{bmatrix} f/\Delta & 0 & M_x/2 & 0 \\ 0 & f/\Delta & M_y/2 & 0 \\ 0 & 0 & 1 & 0 \end{bmatrix}$$

si la projection est perspective de distance focale $f$.

A l'issue de ce rendu, on obtient une image d'intensité $I_{i,j}$ et une carte de profondeur $D_{i,j}$ associées à la vue vj.

Pour calculer les occultations dans la direction de visualisation Vj, on utilise par exemple une technique de type algorithme du peintre ou encore z-buffer, connue de l'homme de métier. Pour un objet Obi de la scène, la profondeur d'un pixel (coordonnée Z) est stockée dans un tampon (pour « buffer », en anglais, d'où Z-buffer), qui correspond ici à la carte de profondeur $D_{i,j}$. Cette carte est une image à deux dimensions (X et Y), chaque élément correspondant à un pixel de l'image d'intensités $I_{i,j}$ de l'objet Obi pour la vue $v_j$. Si un autre élément de l'objet doit être affiché aux mêmes coordonnées (X,Y), on compare les deux profondeurs (Z), et on ne garde que le pixel le plus proche de la caméra. La valeur Z de ce pixel est ensuite placée dans la carte de profondeur, remplaçant donc l'ancienne. Finalement, l'image dessinée reproduit la perception de la profondeur habituelle et logique, l'objet le plus proche cachant les plus lointains.

Dans le mode de réalisation décrit ci-après, on fixe $M = 6$ et le rendu de l'objet s'effectue en projection orthographique suivant les directions $+\vec{x}, -\vec{x}, +\vec{y}, -\vec{y}, +\vec{z}$ et $-\vec{z}$. On a donc une direction de visualisation par face du cube.

Par exemple, comme illustré par la Figure **7**, pour la direction $+\vec{z}$, on utilise la matrice de projection orthographique suivante :

$$MP + \vec{z} = \begin{bmatrix} 1/\Delta & 0 & 0 & M_x/2 \\ 0 & 1/\Delta & 0 & M_y/2 \\ 0 & 0 & 0 & 1 \end{bmatrix},$$

où $\Delta$ désigne la taille des pixels et $(M_x, M_y)$ la résolution de l'image rendue. De même, pour la direction $-\vec{x}$, on utilise la matrice de projection orthographique :

$$MP - \vec{x} = \begin{bmatrix} 0 & 0 & 1/\Delta & M_x/2 \\ 0 & 1/\Delta & 0 & M_y/2 \\ 0 & 0 & 0 & 1 \end{bmatrix}.$$

Bien sûr, l'invention n'est pas limitée à ce cas particulier. Elle permet aussi de choisir un nombre M de directions de visualisation Vj inférieur ou supérieur au nombre de faces du solide considéré, comme illustré par les Figures **5B** et **5C.**

- Etape E112 de reconstruction 3D par projection inverse Comme illustré par la Figure **8**, pour chacune des images d'intensité $I_{i,j}$ et des cartes de profondeur $D_{i,j}$ rendues, on effectue en E112 la projection perspective ou orthographique inverse des points de l'image d'intensité $I_{i,j}$ et une carte de profondeur $D_{i,j}$ dans l'espace 3D.

Soit $\mathcal{R}_i = (O_i; \vec{x}, \vec{y}, \vec{z})$ le repère local de l'objet Obi dont l'origine se situe au centre de l'objet $O_i = (x_i, y_i, z_i)$ dans le repère monde et dont les axes sont alignés sur ceux du repère monde. Comme la profondeur $D$ est encodée sur 8 bits, dans le cas où la projection utilisée est une projection orthographique suivant l'axe $+\vec{z}$, chaque pixel $(u_k, v_k)$ est projeté en un point k de coordonnées, défini comme suit :

$$\begin{pmatrix} x_k \\ y_k \\ z_k \end{pmatrix} = \begin{pmatrix} \left(u_k - \dfrac{M_x}{2}\right)\Delta \\ \left(v_k - \dfrac{M_y}{2}\right)\Delta \\ \dfrac{255 - d}{255}(z_{max} - z_{min}) + z_{min} \end{pmatrix},$$

dans le repère $\mathcal{R}_i$, avec $d = D(u_k, v_k)$, et d'amplitude $\sqrt{I_{i,j}(u_k, v_k)}$.

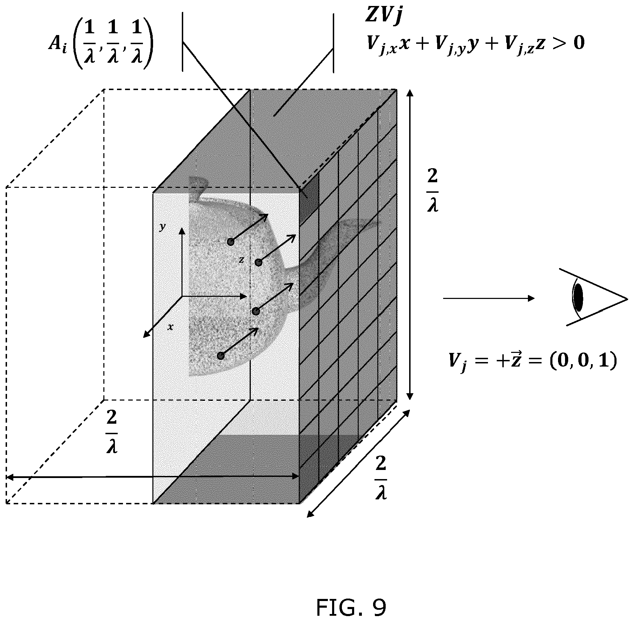

En E121, on détermine une zone de validité ZV des occultations calculées. Elle correspond à une portion de la surface du solide géométrique considéré, à l'intérieur de laquelle les amplitudes des échantillons associés à des vecteurs de fréquence vont recevoir les contributions de ces points de l'objet Oi pour la direction de visualisation Vj. Autrement dit, il s'agit de déterminer la portion de cette surface qui est incluse dans un cône de visualisation autour de la direction de visualisation Vj. Par simplicité, on peut choisir de ne calculer que les valeurs des échantillons de coordonnées $(x,y,z)$ qui satisfont la condition $V_{j,x}x + V_{j,y}y + V_{j,z}z > 0$. Le cône considéré fait un angle de 90 degrés avec la direction Vj. En relation avec la Figure 5A, quand V1 correspond à un rayon d'une sphère, la surface de validité V1 est celle d'une demi-sphère centrée sur V1. En relation avec la Figure **9**, quand Vj est orthogonale à une face, cela revient à prendre la surface ZVj du demi-cube autour de Vj. Les Figures **5B** et **5C** illustrent d'autres exemples de surfaces de validité pour des solides géométriques à faces de type cube ou octaèdre.

Bien sûr, l'invention n'est pas limitée à cette condition particulière. La zone de validité des occultations calculées peut être associée à un cône d'angle plus petit, en fonction du nombre de directions de visualisation Vj et de leur répartition, uniforme ou non dans l'espace. Par exemple, en relation avec la Figure **5A**, si on a 8 directions de visualisation réparties équitablement dans un plan de la sphère, on peut choisir un angle égal à 360/8 degrés pour garantir un recouvrement entre les zones de validité et éviter les ruptures de continuités lorsqu'on passe d'une direction de visualisation à une autre.

On obtient ainsi un nuage de points PNO par vue vj de l'objet Obi, associée à la direction de visualisation Vj. Autrement dit, il s'agit du sous-ensemble des points de l'objet qui sont visibles, c'est-à-dire non occultés, depuis la direction de visualisation Vj.

- Etape E12 : Calcul du sous-spectre angulaire SSAij correspondant à la direction de visualisation Vj Une fois obtenu le sous-ensemble de points non occultés PNO correspondant à la vue $v_j$ de l'objet *Obi,* l'étape suivante E122 est de calculer le sous-spectre angulaire omnidirectionnel correspondant SSAij, sur la surface du solide géométrique.

Dans la suite, on décrit plus en détails cette étape pour l'exemple d'un cube de côté $2/\lambda$ , et dont le centre coïncide avec l'origine du repère $\mathcal{R}_i$ , tel qu'illustré par la Figure **5B.** Bien sûr, l'invention ne se limite pas à ce cas particulier, mais s'applique à tout solide géométrique. S'il s'agit d'une sphère, on utilisera un échantillonnage tel que décrit dans l'art antérieur US2016/0231706 déjà cité.

En relation avec la Figure **9,** on échantillonne les faces de ce cube suivant une grille comprenant un quadrillage régulier, et on affecte à chacun des échantillons (*x,y,z*) ainsi obtenus la valeur d'amplitude suivante :

$$A_{i,j}(x,y,z) = \sum_{k=1}^{M_x M_y} \sqrt{I_{i,j}(u_k,v_k)} \exp\left(-j\frac{2\pi}{\lambda}\left(f_x x_k + f_y y_k + f_z z_k\right)\right),$$

avec $\lambda$ la longueur d'onde utilisée, et $\begin{pmatrix} f_x \\ f_y \\ f_z \end{pmatrix} = \frac{1}{\sqrt{x^2+y^2+z^2}} \begin{pmatrix} x \\ y \\ z \end{pmatrix}$ .

On constate que ni la résolution ni la taille des pixels de l'hologramme n'interviennent dans la formule précédente, ce qui rend le spectre angulaire générique à tout type d'hologramme.

Comme évoqué précédemment, on calcule cette amplitude Aij pour les échantillons (x,y,z) situés dans la zone de validité déterminée.

Les trois sous-étapes E10, E11, E12 sont répétées pour chaque direction angulaire Vj, j$\in$ {1..*M*}. En E13, on calcule ensuite le spectre angulaire SA$_i$ omnidirectionnel de l'objet Obi en accumulant les amplitudes calculées pour l'ensemble des vues vj avec $_j \in$ {1..*M*}, comme suit :

$$A_i(x,y,z) = \sum_{j=1}^{M} A_{i,j}(x,y,z)$$

Le spectre angulaire omnidirectionnel SAi obtenu est ensuite stocké dans une mémoire en vue d'une utilisation ultérieure.

Avantageusement, il est stocké dans une structure de type « texture cubemap », bien connue de l'homme du métier et par exemple décrite à l'adresse suivante https://en.wikipedia.org/wiki/Cube_mapping).

Cette structure de stockage présente l'avantage d'être une structure simple dont l'adressage et l'interpolation entre échantillons peuvent être accélérés matériellement.

Les étapes E0 et E1 sont répétées pour chaque objet Obi de la scène.

On suppose qu'on obtient en E2 une pose de l'observateur U, dont on dérive une position du plan PH de l'hologramme à générer, comme précédemment décrit.

En relation avec la Figure **10,** on détaille maintenant l'étape E3 de dérivation de hologramme à partir de la pluralité de spectres angulaires SAi précalculés.

On note *H* l'hologramme à calculer. Sa résolution est donnée par ($N_x$,$N_y$), et ses pixels sont de taille *p*. Typiquement, les écrans holographiques (SLMs) actuellement disponibles, de type modulateur spatial de lumière ou SLM (pour « Spatial Light Modulator », en anglais), ont une résolution maximale de l'ordre de (3840, 2160) et une taille de pixels minimum de l'ordre de $3.74\mu m$.

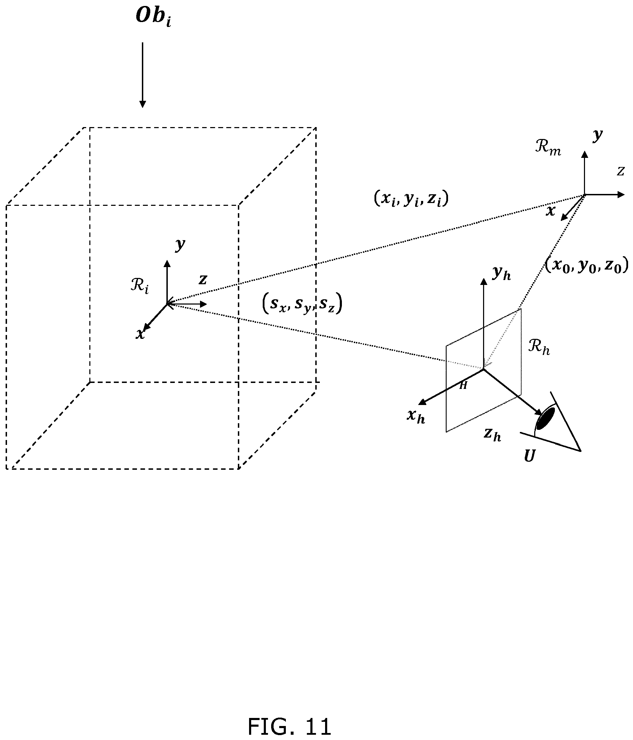

En relation avec la Figure **11,** on note $\mathcal{R}_h = (O; \overrightarrow{x_h}, \overrightarrow{y_h}, \overrightarrow{z_h})$ le repère local de l'hologramme dont l'origine est situé au centre de l'hologramme H, dont les axes définis par $\overrightarrow{x_h}$ et $\overrightarrow{y_h}$ coïncident avec l'axe horizontal et vertical de l'hologramme, respectivement, et dont l'axe défini par $\overrightarrow{z_h}$ coïncide avec l'axe optique de l'hologramme. On note

$$\overrightarrow{x_h} = \begin{pmatrix} x_{h0} \\ x_{h1} \\ x_{h2} \end{pmatrix}, \ \overrightarrow{y_h} = \begin{pmatrix} y_{h0} \\ y_{h1} \\ y_{h2} \end{pmatrix} \text{ et } \overrightarrow{z_h} = \begin{pmatrix} z_{h0} \\ z_{h1} \\ z_{h2} \end{pmatrix}.$$

Enfin, on note $t_h$ = ($x_0$,$y_0$,$z_0$) la position du centre de l'hologramme dans le repère monde. L'étape de dérivation de l'hologramme H à partir du spectre angulaire est décomposée en 2 sous-étapes :

- Sous-étape E31 : Elle consiste à construire le spectre angulaire de l'hologramme $\widehat{H} = \mathcal{F}\{H\}$ , à partir des spectres angulaires SAi précalculés pour les N objets Obi de la scène.

Le spectre angulaire de l'hologramme est échantillonné sur une grille régulière de résolution ($N_x,N_y$), avec un pas d'échantillonnage de $(N_x p)^{-1}$ et $(N_y p)^{-1}$, dans les directions horizontale et verticale, respectivement. Par conséquent, les fréquences fhx, fhy de l'hologramme sont comprises entre - 1/2p et 1/2p.

Le spectre angulaire de l'hologramme est donné par la formule suivante :

$$\hat{H}(f_{h,x}, f_{h,y}) = \sum_{i=1}^{N} A_i \left( \frac{f_x}{\lambda F}, \frac{f_y}{\lambda F}, \frac{f_z}{\lambda F} \right) \exp\left( j2\pi \left( s_x f_{h,x} + s_y f_{h,y} + s_z \sqrt{\lambda^{-2} - f_{h,x}^2 - f_{h,y}^2} \right) \right),$$

Où :

$$F = \max(f_x, f_y, f_z),$$

$$\begin{pmatrix} s_x \\ s_y \\ s_z \end{pmatrix} = \begin{bmatrix} x_{h0} & x_{h1} & x_{h2} \\ y_{h0} & y_{h1} & y_{h2} \\ z_{h0} & z_{h1} & z_{h2} \end{bmatrix} \begin{pmatrix} x_i - x_0 \\ y_i - y_0 \\ z_i - z_0 \end{pmatrix}$$

. désigne la position du centre de l'objet *i* dans le repère

$$\mathcal{R}_h,$$

$$\begin{pmatrix} f_x \\ f_y \\ f_z \end{pmatrix} = \begin{bmatrix} x_{h0} & y_{h0} & z_{h0} \\ x_{h1} & y_{h1} & z_{h1} \\ x_{h2} & y_{h2} & z_{h2} \end{bmatrix} \begin{pmatrix} f_{h,x} \\ f_{h,y} \\ \sqrt{\lambda^{-2} - f_{h,x}^2 - f_{h,y}^2} \end{pmatrix}$$

et les coordonnées fréquentielles du spectre angulaire de l'hologramme dans le repère Ri de l'objet Obi.

Comme $\hat{H}$ est échantillonné suivant une grille régulière, le changement de coordonnées $(f_{h,x}, f_{h,y}) \rightarrow (f_x, f_y, f_z)$ (qui correspond à une rotation) a pour effet de distordre la grille d'échantillonnage. Ainsi, la valeur $A_i\left(\frac{f_x}{\lambda M}, \frac{f_y}{\lambda M}, \frac{f_z}{\lambda M}\right)$ peut ne pas avoir été calculée lors de l'étape E31, et une interpolation est très souvent nécessaire. On peut utiliser une interpolation bilinéaire, mais de meilleurs résultats sont obtenus en utilisant une interpolation bicubique, ces deux techniques étant connues de l'homme de métier.

- Sous-étape E32 : Une fois le spectre angulaire de l'hologramme calculé, la dernière étape consiste à lui appliquer une transformée de Fourier inverse pour obtenir l'hologramme H, selon la formule suivante :

$$H(x, y) = \mathcal{F}^{-1}\{\hat{H}\}(x, y)$$

Avec l'invention, il devient ainsi possible pour un observateur porteur d'un système de restitution holographique porté près de l'œil de se déplacer autour de d'une scène comprenant plusieurs objets et de visualiser en temps réel un hologramme de cette scène adapté à sa pose.

On notera que l'invention qui vient d'être décrite, peut être mise en oeuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en oeuvre la ou les fonctions décrites pour le module ou l'entité concerné(e).

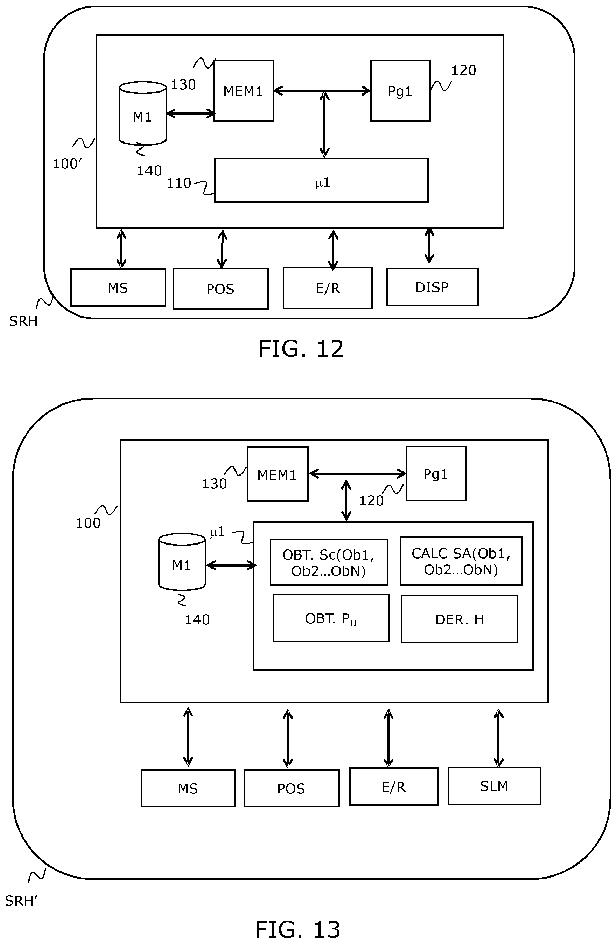

En relation avec les figures **12** et **13,** on présente maintenant la structure simplifiée d'un dispositif de génération d'un hologramme numérique 100, 100' adapté pour mettre en oeuvre le procédé de génération d'un hologramme numérique selon l'un quelconque des modes particuliers de réalisation de l'invention qui viennent d'être décrit en relation avec les figures **4 à 11.**

Le dispositif de traitement 100, 100' est notamment configuré pour:

Par objet, calculer un spectre angulaire « omnidirectionnel » du champ lumineux émis par un objet de la scène à la surface d'un solide géométrique centré sur ledit objet, une surface dudit solide étant échantillonnée selon une grille prédéterminée, un échantillon de la grille étant associé à un vecteur de fréquences (f = $(f_x, f_y, f_z)$) et à une amplitude correspondant à une somme de contributions au champ lumineux de points de l'objet selon une direction égale à celle du vecteur de fréquences ;

Pour la scène:

- Obtenir une pose ($P_U$) d'un observateur;

- Dériver un spectre angulaire de l'hologramme ($SA_H$) de la scène en fonction de la pose obtenue à partir des spectres angulaires « omnidirectionnels » ($SA_i$) calculés par objet.

Selon l'invention, lors du calcul d'un spectre angulaire du champ lumineux par objet de la scène, le dispositif 100 est en outre configuré pour :
Calculer un spectre angulaire du champ lumineux par objet de la scène, pour une pluralité de directions de visualisation prédéterminées :

- par direction de visualisation (Vj) :

  ◦ Déterminer un sous-ensemble de points de l'objet non occultés ;

  ◦ Calculer un sous-spectre angulaire du champ lumineux émis par les points du sous-ensemble; et

- Sommer sur la pluralité de directions angulaires prédéterminées, les amplitudes des sous-spectres angulaires calculés, associées à un même échantillon de la grille.

Selon un mode particulier de réalisation de l'invention illustré par la Figure **12,** le dispositif de génération d'un hologramme numérique 100 a l'architecture classique d'un ordinateur et comprend notamment, une unité de traitement 110, équipée d'un processeur $\mu_1$, et pilotée par un programme d'ordinateur $Pg_1$ 120, stocké dans une mémoire 130 et mettant en oeuvre le procédé selon l'invention. A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en oeuvre les étapes du procédé décrit précédemment, selon les instructions du programme d'ordinateur 120.
Selon un autre mode particulier de réalisation de l'invention illustré par la Figure **13,** le procédé de traitement est mis en oeuvre par des modules fonctionnels. Pour cela, le dispositif 100' comprend au moins les modules fonctionnels suivants :

- Un module OBT. Sc d'obtention de données représentatives d'une scène comprenant au moins un objet ;

- un module CALC. SAi de calcul d'un spectre angulaire d'un champ lumineux émis par un dit objet, dit spectre angulaire « omni directionnel » sur la surface d'un solide géométrique à faces;

- un module OBT. $P_U$ d'obtention d'une pose de l'observateur ;

- un module DER. H de dérivation de l'hologramme à partir des spectres angulaires calculés par objet et de la pose $P_U$.

Selon un mode de réalisation de l'invention, le module de calcul d'un spectre angulaire comprend les sous-modules suivants aptes à être mis en oeuvre pour une pluralité de directions de visualisation prédéterminées :

- par direction de visualisation (Vj) :

  ◦ Détermination d'un sous-ensemble de points de l'objet non occultés ;

  ◦ Calcul d'un sous-spectre angulaire du champ lumineux émis par les points du sous-ensemble; et

- Sommation sur la pluralité de directions angulaires prédéterminées, des amplitudes des sous-spectres angulaires calculés, associées à un même échantillon de la grille.

Avantageusement, le dispositif 100' comprend en outre un module M1 de stockage des spectres angulaires SAi des objets Obi de la scène.

Ces unités sont pilotées par le processeur $\mu$1 de l'unité de traitement 110.

L'unité de traitement 110 coopère avec les différents modules fonctionnels décrits ci-dessus et la mémoire MEM1 afin de mettre en oeuvre les étapes du procédé de génération selon l'invention. Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en oeuvre la fonction correspondante au module lorsque les instructions de code sont exécutées par le processeur. Sous une forme matérielle, un tel module fonctionnel peut mis en oeuvre par tout type de circuits d'encodage adaptés, tels que par exemple et de manière non limitative des microprocesseurs, des processeurs de traitement du signal (DSP pour Digital Signal Processor en anglais), des circuits intégrés spécifiques à des applications (ASICs pour « Application Specific Integrated Circuit » en anglais), des circuits FPGA (pour « Field Programmable Gate Arrays » en anglais), un câblage d'unités logiques.

De façon avantageuse, un tel dispositif 100, 100' peut être intégré à un système de restitution holographique SRH, par exemple un système porté près de l'œil, tel qu'un visiocasque. Le dispositif 100, 100' est alors agencé pour coopérer au moins avec les modules suivants du système :

- un module E/R d'émission/réception de données, par l'intermédiaire duquel il reçoit des informations de la description de la scène ;

- un module de suivi positionnel POS de l'observateur dans le référentiel Monde Rm ;

- un écran holographique SLM apte à restituer l'hologramme ; et

- une mémoire MS apte à stocker les spectres angulaires pré-calculés de chaque objet (Obi) de la scène (Sc).

Le domaine d'application de l'invention est celui de la réalité augmentée. Toutes les déclinaisons sont envisageables, comme l'aide à la navigation, l'enrichissement de contenus, les applications militaires, la visioconférence, le travail collaboratif, la télé-médecine...

Parmi ces exemples, une application concrète est l'affichage d'un ensemble d'objets virtuels dans l'environnement direct de l'observateur à l'aide d'un visiocasque équipé d'une application de réalité augmentée. Le visiocasque est intégré à un système de restitution holographique selon l'invention.

Dans un exemple d'usage non représenté, le système holographique comprend un serveur apte à se transmettre des données au visiocasque par une liaison sans fil, qui pré-calcule le spectre angulaire omnidirectionnel de chaque objet virtuel avant le démarrage de l'application. Au démarrage de l'application, les données de chaque spectre sont copiées dans la mémoire locale MS du visiocasque. Puis, lorsque l'utilisateur se déplace au sein du contenu virtuel, le visiocasque dérive l'hologramme correspondant au point de vue de l'utilisateur, en temps réel, à partir des données pré-calculées.

Par exemple, les objets de la scène sont les correspondants de l'observateur au cours d'une visioconférence. Un avantage est que l'hologramme est dérivé localement des spectres pré-calculés, ce qui permet d'offrir une latence minimale.

De façon alternative, les spectres angulaires pourraient être stockés dans une mémoire locale du serveur. Sur réception d'une pose de l'observateur U en provenance du module de suivi, le viosicasque la transmet au serveur qui calcule l'hologramme adapté à la pose reçue et la retransmet au visiocasque. Un avantage est de réaliser un visiocasque plus léger et moins coûteux.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention telle que définie dans les revendications.

## Revendications

1. Procédé de génération d'un hologramme numérique représentatif d'une scène 3D, ladite scène comprenant au moins un objet ($Ob_i$), un objet étant défini par un ensemble de points et leur intensité associée, ledit procédé comprenant :

   Par objet (Obi), une étape préalable (E1) de calcul d'un spectre angulaire « omnidirectionnel » (SAi) correspondant à la décomposition en ondes planes du champ lumineux émis par l'objet à la surface d'un solide géométrique centré sur ledit objet, une surface dudit solide étant échantillonnée selon une grille prédéterminée, le calcul associant un échantillon (x,y,z) de la grille à un vecteur de fréquences (f = ($f_x$, $f_y$, $f_z$)) et à une amplitude (Ai) correspondant à une somme de contributions au champ lumineux de points de l'objet selon une direction égale à celle du vecteur de fréquences ;

Pour la scène, les étapes suivantes :

- Obtention (E2) d'une pose ($P_U$) d'un observateur (U);
- Dérivation (E3) de l'hologramme (H) de la scène en fonction de la pose obtenue à partir des spectres angulaires « omnidirectionnels » ($SA_i$) calculés par objet;

**caractérisé en ce que** l'étape (E1) de calcul d'un spectre angulaire du champ lumineux par objet de la scène comprend, pour une pluralité de directions de visualisation prédéterminées, les sous-étapes suivantes :

- par direction de visualisation (Vj) :

  ∘ Une détermination (E11) d'un sous-ensemble de points de l'objet, comprenant les points non occultés ;
  ∘ Un calcul (E12) d'un sous-spectre angulaire du champ lumineux émis par les points du sous-ensemble déterminé; et

- Une sommation (E13) sur la pluralité de directions angulaires prédéterminées des amplitudes des sous-spectres angulaires calculés, associées à un même échantillon de la grille.

2. Procédé de génération d'un hologramme numérique selon la revendication **1**, **caractérisé en ce que** l'étape de détermination du sous-ensemble de points non occultés comprend les sous-étapes suivantes :

   - Un rendu (E111) 2D+Z de l'objet par projection des points de l'objet selon la direction de visualisation (Vj) et formation d'une image d'intensités et d'une carte de profondeurs des points projetés ; et
   - La projection inverse (E112) des points de l'image d'intensité formée en des points de l'objet dans un repère de l'objet et calcul de leurs coordonnées en fonction de la carte de profondeur.

3. Procédé de génération d'un hologramme numérique selon l'une des revendications **1** ou **2**, **caractérisé en ce que** l'étape de calcul du sous-spectre angulaire (E12) comprend une sous-étape (E121) de détermination d'une zone de validité des occultations associées à une direction de visualisation sur la surface du solide géométrique et **en ce que** le calcul (E122) des amplitudes des échantillons est effectué pour les échantillons compris dans ladite zone.

4. Procédé de génération d'un hologramme numérique selon la revendication **3**, **caractérisé en ce que** les échantillons compris dans la zone de validité vérifient la condition suivante :

$$V_{j,x}x + V_{j,y}y + V_{j,z}z > 0$$

Où (x,y,z) désigne la position de l'échantillon et (Vx, Vy, Vz) la direction de visualisation dans un repère (Ri) de l'objet (Obi).

5. Procédé de génération d'un hologramme numérique selon l'une des revendications **1** à **4**, **caractérisé en ce que** le solide géométrique comprend une pluralité de faces planes et **en ce que** la grille prédéterminée est découpée en une pluralité de sous-grilles formant un quadrillage régulier, une sous-grille étant associée à une face du solide.

6. Procédé de génération d'un hologramme numérique selon la revendication **5**, **caractérisé en ce que** l'amplitude associée à un échantillon de la sous-grille d'une face du solide, pour le calcul du sous-spectre angulaire selon une dite direction de visualisation, est définie par la formule suivante :

$$A_{i,j}(x,y,z) = \sum_{k=1}^{M_x M_y} \sqrt{I_{i,j}(u_k, v_k)} \exp\left(-j\frac{2\pi}{\lambda}\left(f_x x_k + f_y y_k + f_z z_k\right)\right),$$

Avec Mx, My les dimensions des images d'intensité et de profondeur, $\lambda$ la longueur d'onde utilisée, et

$$\begin{pmatrix} f_x \\ f_y \\ f_z \end{pmatrix} = \frac{1}{\sqrt{x^2+y^2+z^2}} \begin{pmatrix} x \\ y \\ z \end{pmatrix}$$

les fréquences associées à l'échantillon (x,y,z).

7. Procédé de génération d'un hologramme numérique selon l'une des revendications **5 ou 6, caractérisé en ce que** le solide géométrique est un cube.

8. Procédé de génération d'un hologramme numérique selon l'une des revendications **5 à 7, caractérisé en ce que** la pluralité de directions de visualisation comprend autant de directions que le solide compte de faces.

9. Procédé de génération d'un hologramme numérique selon l'une des revendications précédentes, **caractérisé en ce que** l'étape de dérivation d'un spectre angulaire de l'hologramme de la scène comprend une dérivation d'un spectre angulaire d'un sous-hologramme par objet de la scène à partir du spectre angulaire dudit objet, une sommation des spectres angulaires des soushologrammes dérivés et l'application (E32) d'une transformée de Fourier inverse au spectre angulaire dérivé pour obtenir l'hologramme (H).

10. Procédé de génération d'un hologramme numérique selon la revendication **9, caractérisé en ce que**, le spectre angulaire de l'hologramme est dérivé à partir des spectres angulaires « multidirectionnels » ($SA_i$) calculés par objet ($Obi$) selon la formule suivante :

$$\widehat{H}(f_{h,x}, f_{h,y}) = \sum_{i=1}^{N} SA_i\left(\frac{f_x}{\lambda F}, \frac{f_y}{\lambda F}, \frac{f_z}{\lambda F}\right) \exp\left(j2\pi\left(s_x f_{h,x} + s_y f_{h,y} + s_z \sqrt{\lambda^{-2} - f_{h,x}^2 - f_{h,y}^2}\right)\right),$$

Où :

$\mathcal{R}_h = (O; \overrightarrow{x_h}, \overrightarrow{y_h}, \overrightarrow{z_h})$ désigne un repère local de l'hologramme dont l'origine est situé au centre de l'hologramme H, dont les axes définis par $\overrightarrow{x_h}$ et $\overrightarrow{y_h}$ coïncident avec l'axe horizontal et vertical de l'hologramme, respectivement, et dont l'axe défini par $\overrightarrow{z_h}$ coïncide avec l'axe optique de l'hologramme. On note $\overrightarrow{x_h} = \begin{pmatrix} x_{h0} \\ x_{h1} \\ x_{h2} \end{pmatrix}$, $\overrightarrow{y_h} = \begin{pmatrix} y_{h0} \\ y_{h1} \\ y_{h2} \end{pmatrix}$ et $\overrightarrow{z_h} = \begin{pmatrix} z_{h0} \\ z_{h1} \\ z_{h2} \end{pmatrix}$.

$$F = \max(f_x, f_y, f_z),$$

$$\begin{pmatrix} s_x \\ s_y \\ s_z \end{pmatrix} = \begin{bmatrix} x_{h0} & x_{h1} & x_{h2} \\ y_{h0} & y_{h1} & y_{h2} \\ z_{h0} & z_{h1} & z_{h2} \end{bmatrix} \begin{pmatrix} x_i - x_0 \\ y_i - y_0 \\ z_i - z_0 \end{pmatrix}$$ désigne la position du centre de l'objet $Obi$ dans le repère $\mathcal{R}_h$ , et

$$\begin{pmatrix} f_x \\ f_y \\ f_z \end{pmatrix} = \begin{bmatrix} x_{h0} & y_{h0} & z_{h0} \\ x_{h1} & y_{h1} & z_{h1} \\ x_{h2} & y_{h2} & z_{h2} \end{bmatrix} \begin{pmatrix} f_{h,x} \\ f_{h,y} \\ \sqrt{\lambda^{-2} - f_{h,x}^2 - f_{h,y}^2} \end{pmatrix}$$ désignent les coordonnées fréquentielles du spectre angulaire de l'hologramme dans le repère (Ri) de l'objet Obi.

11. Dispositif (100, 100') de génération d'un hologramme numérique (H) représentatif d'une scène 3D comprenant au moins un objet (Obi), ledit dispositif comprend un processeur qui est configuré pour :

Par objet, calculer un spectre angulaire « omnidirectionnel » correspondant à la décomposition en ondes planes du champ lumineux émis par un objet de la scène à la surface d'un solide géométrique centré sur ledit objet, une surface dudit solide étant échantillonnée selon une grille prédéterminée, le calcul associant un échantillon de la grille à un vecteur de fréquences (f = $(f_x, f_y, f_z)$) et à une amplitude correspondant à une somme de contributions au champ lumineux de points de l'objet selon une direction égale à celle du vecteur de fréquences ;
Pour la scène:

- Obtenir une pose ($P_U$) d'un observateur (U);
- Dériver l'hologramme (H) de la scène en fonction de la pose obtenue à partir des spectres angulaires « omnidirectionnels » ($SA_i$) calculés par objet ;

**caractérisé en ce qu'**il est en outre configuré pour, lors du calcul d'un spectre angulaire du champ lumineux par objet de la scène, pour une pluralité de directions de visualisation prédéterminées :

- par direction de visualisation (Vj) :

  ◦ Déterminer un sous-ensemble de points de l'objet non occultés ;
  ◦ Calculer un sous-spectre angulaire du champ lumineux émis par les points du sous-ensemble; et

- Sommer sur la pluralité de directions angulaires prédéterminées, les amplitudes des sous-spectres angulaires calculés, associées à un même échantillon de la grille.

12. Système de restitution holographique (SRH, SRH') comprenant un module d'obtention d'une scène tridimensionnelle comprenant au moins un objet, un module d'obtention d'une pose d'un observateur, et un écran holographique (SLM) apte à restituer un hologramme, **caractérisé en ce que** le système comprend en outre un dispositif (100, 100') de génération de l'hologramme selon la revendication **11.**

13. Système de restitution holographique (SRH, SRH') selon la revendication **12, caractérisé en ce qu'**il comprend un visiocasque destiné à être porté près des yeux de l'observateur (U), ledit visiocasque comprenant un module de stockage (M1) adapté au stockage du spectre angulaire omnidirectionnel pré-calculé pour le au moins un objet de la scène.

14. Programme d'ordinateur (Pg1) comportant des instructions pour la mise en oeuvre du procédé de calcul d'un hologramme numérique selon l'une quelconque des revendications **1** à **10,** lorsque ledit programme est exécuté par un processeur.

15. Support d'enregistrement lisible par un ordinateur, sur lequel est enregistré un programme d'ordinateur comprenant des instructions de code de programme pour l'exécution des étapes du procédé selon l'une des revendications **1** à **10.**

**Patentansprüche**

1. Verfahren zur Erzeugung eines für eine 3D-Szene repräsentativen digitalen Hologramms, wobei die Szene mindestens ein Objekt (Ob;) aufweist, wobei ein Objekt durch eine Reihe von Punkten und deren zugehörige Intensität definiert ist, wobei das Verfahren

   für jedes Objekt (Ob;) einen vorausgehenden Schritt (E1) der Berechnung eines "omnidirektionalen" Winkelspektrums ($SA_i$), das der Aufteilung des vom Objekt an der Oberfläche eines auf das Objekt zentrierten geometrischen Festkörpers ausgesandten Lichtfeldes in ebene Wellen entspricht, wobei eine Oberfläche des Festkörpers nach einem vorbestimmten Raster abgetastet wird, wobei die Berechnung eine Probe (x, y, z) des Rasters einem Frequenzvektor ($f = (f_x, J_y, J_z)$) und einer Amplitude ($A_i$), die einer Summe von Beiträgen zum Leuchtfeld von Punkten des Objekts in einer der Richtung des Frequenzvektors gleichen Richtung entspricht, zuordnet;
   für die Szene die folgenden Schritte :

   - Erhalten (E2) einer Position ($P_u$) eines Beobachters (U) ;
   - Ableiten (E3) des Hologramms (H) der Szene in Abhängigkeit von der erhaltenen Position aus den für jedes Objekt errechneten « omnidirektionalen" Winkelspektren ($SA_i$)

   aufweist,
   **dadurch gekennzeichnet, daß** der Schritt (E1) des Berechnens eines Winkelspektrums des Leuchtfelds für jedes Objekt der Szene für eine Vielzahl von vorbestimmten Blickrichtungen die folgenden Teilschritte aufweist:

   - für jede Blickrichtung ($V_j$) :

= ein Bestimmen (E11) einer Teileinheit von Punkten des Objekts, die die nicht verdeckten Punkte aufweist;
= ein Berechnen (E12) eines Teilwinkelspektrums des von den Punkten der bestimmten Teileinheit ausgesandten Leuchtfelds,

und

- ein Aufsummieren (E13) der Amplituden der berechneten Teilwinkelspektren, die einer gleichen Probe des Rasters zugeordnet sind, über die Vielzahl vorbestimmter Winkelrichtungen.

2. Verfahren zur Erzeugung eines digitalen Hologramms gemäß Anspruch 1, **dadurch gekennzeichnet, daß** der Schritt des Bestimmens der Teileinheit von nicht verdeckten Punkten die folgenden Teilschritte aufweist:

- eine 2D+Z-Wiedergabe (E111) des Objekts durch Projektion der Punkte des Objekts gemäß der Blickrichtung ($V_j$) und Bilden eines Bilds von Intensitäten und einer Karte der Tiefen der projizierten Punkte, und
- die umgekehrte Projektion (E112) der Punkte des Bilds von Intensitäten, die an Punkten des Objekts in einem Bezugspunkt des Objekts gebildet sind und Berechnen ihrer Koordinaten in Abhängigkeit von der Karte der Tiefen.

3. Verfahren zur Erzeugung eines digitalen Hologramms gemäß einem der Ansprüche 1 oder 2, **dadurch gekennzeichnet, daß** der Schritt des Berechnens des Teilwinkelspektrums (E12) einen Teilschritt (E121) des Bestimmens einer Gültigkeitszone der Verdeckungen, die einer Blickrichtung zugeordnet sind, auf der Oberfläche des geometrischen Festkörpers aufweist und daß das Berechnen (E122) der Amplituden der Proben für die in der Zone enthaltenen Proben durchgeführt wird.

4. Verfahren zur Erzeugung eines digitalen Hologramms gemäß Anspruch 3, **dadurch gekennzeichnet, daß** die in der Gültigkeitszone enthaltenen Proben die folgende Bedingung erfüllen :

$$V_{j,x}x + V_{j,y}y + V_{j,z}z > 0$$

wobei (x, y, z) die Position der Probe bezeichnet und (Vx, Vy , Vz) die Blickrichtung in einem Bezugspunkt ($R_j$) des Objekts (Ob;) bezeichnet.

5. Verfahren zur Erzeugung eines digitalen Hologramms gemäß einem der Ansprüche 1 bis 4, **dadurch gekennzeichnet, daß** der geometrische Festkörper eine Vielzahl von ebenen Flächen aufweist und daß das vorbestimmte Raster in eine Vielzahl von Unterrastern aufgeteilt ist, die ein regelmäßiges Gitter bilden, wobei ein Unterraster einer Fläche des Festkörpers zugeordnet ist.

6. Verfahren zur Erzeugung eines digitalen Hologramms gemäß Anspruch 5, **dadurch gekennzeichnet, daß** die einer Probe des Unterrasters einer Fläche des Festkörpers zugeordnete Amplitude für die Berechnung des Teilwinkelspektrums in einer besagten Blickrichtung durch folgende Formel definiert ist:

$$A_{i,j}(x,y,z) = \sum_{k=1}^{M_x M_y} \sqrt{I_{i,j}(u_k, v_k)} \exp\left(-j\frac{2\pi}{\lambda}\left(f_x x_k + f_y y_k + f_z z_k\right)\right),$$

mit Mx, My als Abmessungen des Intensitäts- und des Tiefenbilds, $\lambda$, als verwendete Wellenlänge und

$$\begin{pmatrix} f_x \\ f_y \\ f_z \end{pmatrix} = \frac{1}{\sqrt{x^2+y^2+z^2}} \begin{pmatrix} x \\ y \\ z \end{pmatrix}$$

als den der Probe (x, y, z) zugeordneten Frequenzen.

7. Verfahren zur Erzeugung eines digitalen Hologramms gemäß einem der Ansprüche 5 oder 6, **dadurch gekennzeichnet, daß** der geometrische Festkörper ein Würfel ist.

8. Verfahren zur Erzeugung eines digitalen Hologramms gemäß einem der Ansprüche 5 bis 7, **dadurch gekennzeich-**

**net, daß** die Vielzahl der Blickrichtungen soviel Richtungen aufweist, wie der Festkörper Flächen aufweist.

9. Verfahren zur Erzeugung eines digitalen Hologramms gemäß einem der vorangehenden Ansprüche, **dadurch gekennzeichnet, daß** der Schritt des Ableitens eines Winkelspektrums des Hologramms der Szene ein Ableiten eines Winkelspektrums eines Teilhologramms für jedes Objekt der Szene vom Winkelspektrum des Objekts ausgehend, ein Aufsummieren der Winkelspektren der abgeleiteten Teilhologramme und das Anwenden (E32) einer inversen Fourier-Transformierten auf das abgeleitete Winkelspektrum zum Erhalten des Hologramms (H) aufweist.

10. Verfahren zur Erzeugung eines digitalen Hologramms gemäß Anspruch 9, **dadurch gekennzeichnet, daß** das Winkelspektrum des Hologramms aus den berechneten "multidirektionalen" Winkelspektren (SA$_i$) abgeleitet wird, die für jedes Objekt (Ob;) nach folgender Formel berechnet werden :

$$\widehat{H}\left(f_{h,x}, f_{h,y}\right) = \sum_{i=1}^{N} SA_i \left(\frac{f_x}{\lambda F}, \frac{f_y}{\lambda F}, \frac{f_z}{\lambda F}\right) \exp\left(j2\pi\left(s_x f_{h,x} + s_y f_{h,y} + s_z \sqrt{\lambda^{-2} - f_{h,x}^2 - f_{h,y}^2}\right)\right),$$

wobei:

$\mathcal{R}_h = (O; \overrightarrow{x_h}, \overrightarrow{y_h}, \overrightarrow{z_h})$ einen lokalen Bezugspunkt des Hologramms bezeichnet, dessen Ursprung im Zentrum des Hologramms H liegt, dessen durch $\overrightarrow{x_h}$ und $\overrightarrow{y_h}$, definierte Achsen mit der entsprechenden horizontalen und vertikalen Achse des Hologramms zusammenfallen und deren durch $\overrightarrow{z_h}$ definierte Achse mit der optischen Achse des Hologramms zusammenfällt. Wobei :

$$\overrightarrow{x_h} = \begin{pmatrix} x_{h0} \\ x_{h1} \\ x_{h2} \end{pmatrix}, \quad \overrightarrow{y_h} = \begin{pmatrix} y_{h0} \\ y_{h1} \\ y_{h2} \end{pmatrix} \text{ und } \quad \overrightarrow{z_h} = \begin{pmatrix} z_{h0} \\ z_{h1} \\ z_{h2} \end{pmatrix} .$$

$$F = \max\left(f_x, f_y, f_z\right) ,$$

$$\begin{pmatrix} s_x \\ s_y \\ s_z \end{pmatrix} = \begin{bmatrix} x_{h0} & x_{h1} & x_{h2} \\ y_{h0} & y_{h1} & y_{h2} \\ z_{h0} & z_{h1} & z_{h2} \end{bmatrix} \begin{pmatrix} x_i - x_0 \\ y_i - y_0 \\ z_i - z_0 \end{pmatrix}$$ die Position des Zentrums des Objekts Ob$_i$ im Bezugspunkt R$_h$ bezeichnet

$$\begin{pmatrix} f_x \\ f_y \\ f_z \end{pmatrix} = \begin{bmatrix} x_{h0} & y_{h0} & z_{h0} \\ x_{h1} & y_{h1} & z_{h1} \\ x_{h2} & y_{h2} & z_{h2} \end{bmatrix} \begin{pmatrix} f_{h,x} \\ f_{h,y} \\ \sqrt{\lambda^{-2} - f_{h,x}^2 - f_{h,y}^2} \end{pmatrix}$$

und die Frequenzkoordinaten des Winkelspektrums des Hologramms im Bezugspunkt (R$_i$) des Objekts Ob$_i$ bezeichnen.

11. Vorrichtung (100, 100') zum Erzeugen eines für eine 3D-Szene repräsentativen digitalen Hologramms (H) mit mindestens einem Objekt (Ob$_i$), wobei die Vorrichtung einen Prozessor aufweist, um :

für jedes Objekt (Ob;) ein "omnidirektionales" Winkelspektrum (SA$_i$), das der Aufteilung des vom Objekt an der Oberfläche eines auf das Objekt zentrierten geometrischen Festkörpers ausgesandten Lichtfeldes in ebene Wellen entspricht, zu berechnen, wobei eine Oberfläche des Festkörpers nach einem vorbestimmten Raster abgetastet wird, wobei die Berechnung eine Probe des Rasters einem Frequenzvektor (f = ($f_x$, $J_y$, $J_z$)) und einer Amplitude (A$_i$), die einer Summe von Beiträgen zum Leuchtfeld von Punkten des Objekts in einer der Richtung des Frequenzvektors gleichen Richtung entspricht, zuordnet;
für die Szene:

- eine Position (P$_u$) eines Beobachters (U) zu erhalten ;
- das Hologramm (H) der Szene in Abhängigkeit von der erhaltenen Position aus den für jedes Objekt errechneten « omnidirektionalen" Winkelspektren (SA$_i$) abzuleiten;

**dadurch gekennzeichnet, daß** sie außerdem dazu ausgelegt ist, bei der Berechnung eines Winkelspektrums des Leuchtfelds für jedes Objekt der Szene für eine Vielzahl von vorbestimmten Blickrichtungen :

- für jede Blickrichtung ($V_j$) :

= eine Teileinheit von nicht verdeckten Punkten des Objekts zu bestimmen;
= ein Teilwinkelspektrum des von den Punkten der bestimmten Teileinheit ausgesandten Leuchtfelds zu berechnen,

und
- über die Vielzahl vorbestimmter Winkelrichtungen die Amplituden der berechneten Teilwinkelspektren aufzusummieren, die einer gleichen Probe des Rasters zugeordnet sind.

**12.** System für eine holographische Reproduktion (SRH, SRH') mit einem Modul zum Erhalten einer dreidimensionalen Szene, die mindestens ein Objekt, ein Modul zum Erhalten einer Position eines Betrachters und einen holographischen Bildschirm (SLM) aufweist, der geeignet ist, ein Hologramm wiederzugeben, **dadurch gekennzeichnet, daß** das System außerdem eine Vorrichtung (100, 100') zum Erzeugen eines Hologramms gemäß Anspruch 11 aufweist.

**13.** System für eine holographische Reproduktion (SRH, SRH') gemäß Anspruch 12, **dadurch gekennzeichnet, daß** es einen Videohelm aufweist, der dazu bestimmt ist, nahe der Augen des Beobachters (U) getragen zu werden, wobei der Videohelm ein Speichermodul (M1) aufweist, das dazu ausgelegt ist, das vorberechnete omnidirektionale Winkelspektrum für das mindestens eine Objekt der Szene zu speichern.

**14.** Computerprogramm (Pg 1) mit Anweisungen für das Durchführen des Verfahrens zum Berechnen eines digitalen Hologramms gemäß einem der Ansprüche 1 bis 10, wenn das Programm von einem Prozessor durchgeführt wird.

**15.** Von einem Computer lesbares Speichermedium, auf dem ein Computerprogramm mit Programmcodeanweisungen zur Durchführung der Schritte des Verfahrens gemäß einem der Ansprüche 1 bis 10 gespeichert ist.

**Claims**

**1.** A method for generating a digital hologram representative of a 3D scene, said scene comprising at least one object ($Ob_i$), an object being defined by a set of points and their associated intensity, said method comprising:

On a per-object basis (Obi), a preliminary step (E1) of calculating an "omnidirectional" angular spectrum (SAai) corresponding to the plane-wave decomposition of the light field emitted by the object at the surface of a geometric solid centred on said object, a surface of said solid being sampled according to a predetermined grid, the calculation associating a sample (x,y,z) of the grid to a frequency vector (f = $(f_x, f_y, f_Z)$) and to an amplitude (Ai) corresponding to a sum of contributions to the light field of points of the object along a direction equal to that of the frequency vector;
For the scene, the following steps:

- Obtaining (E2) a pose ($P_U$) of an observer (U);
- Deriving (E3) the hologram (H) of the scene as a function of the pose obtained from the "omnidirectional" angular spectra (SAi) calculated on a per-object basis;

**characterised in that** the step (E1) of calculating an angular spectrum of the light field on a per-object-of-the-scene basis of the scene comprises, for a plurality of predetermined viewing directions, the following sub-steps:

- on a per-viewing-direction (Vj) basis:

∘ determining (E11) a sub-set of points of the object, comprising the non-occulted points;
∘ calculating (E12) an angular sub-spectrum of the light field emitted by the points of the determined sub-set; and

- summing (E13) over the plurality of predetermined angular directions the amplitudes of the calculated angular sub-spectra, associated with a same sample of the grid.

2. A method for generating a digital hologram according to claim **1**, **characterised in that** the step of determining the sub-set of non-occulted points comprises the following sub-steps:

   - 2D+Z rendering (E111) the object by projecting the points of the object along the viewing direction (Vj) and forming an intensity image and a depth map of the projected points; and
   - inversely projecting (E112) the points of the formed intensity image to points of the object in a reference frame of the object and calculating the coordinates thereof as a function of the depth map.

3. A method for generating a digital hologram according to one of claims **1** or **2**, **characterised in that** the step of calculating the angular sub-spectrum (E12) comprises a sub-step (E121) of determining an area of validity of the occultations associated with a viewing direction at the surface of the geometric solid and **in that** the calculation (E122) of the sample amplitudes is performed for the samples comprised in said area.

4. A method for generating a digital hologram according to claim **3**, **characterised in that** the samples comprised in the area of validity satisfy the following condition:

$$V_{j,x}x + V_{j,y}y + V_{j,z}z > 0$$

   where (x,y,z) denotes the position of the sample and (Vx, Vy, Vz) the viewing direction in a reference frame (Ri) of the object (Obi).

5. A method for generating a digital hologram according to one of claims **1** to **4**, **characterised in that** the geometric solid comprises a plurality of plane faces and **in that** the predetermined grid is cut into a plurality of sub-grids forming a regular grid pattern, a sub-grid being associated with a face of the solid.

6. A method for generating a digital hologram according to claim **5**, **characterised in that** the amplitude associated with a sample of the sub-grid of a face of the solid, for the calculation of the angular sub-spectrum along a said viewing direction, is defined by the following formula:

$$A_{i,j}(x,y,z) = \sum_{k=1}^{M_x M_y} \sqrt{I_{i,j}(u_k,v_k)} \exp\left(-j\frac{2\pi}{\lambda}\left(f_x x_k + f_y y_k + f_z z_k\right)\right),$$

   with Mx, My the dimensions of the intensity and depth images, $\lambda$, the wavelength used, and $\begin{pmatrix} f_x \\ f_y \\ f_z \end{pmatrix} = \frac{1}{\sqrt{x^2+y^2+z^2}} \begin{pmatrix} x \\ y \\ z \end{pmatrix}$ the frequencies associated with the sample (x,y,z).

7. A method for generating a digital hologram according to one of claims **5** or **6**, **characterised in that** the geometric solid is a cube.

8. A method for generating a digital hologram according to one of claims **5** to **7**, **characterised in that** the plurality of viewing directions comprises as many directions as the solid has faces.

9. A method for generating a digital hologram according to one of the preceding claims, **characterised in that** the step of deriving an angular spectrum of the hologram of the scene comprises deriving an angular spectrum of a sub-hologram on a per-object-of-the-scene basis from the angular spectrum of said object, summing the angular spectra of the derived sub-holograms and applying (E32) an inverse Fourier transform to the derived angular spectrum to obtain the hologram (H).

10. A method for generating a digital hologram according to claim **9**, **characterised in that** the angular spectrum of the hologram is derived from the "multidirectional" angular spectra (SAi) calculated on a per-object (Obi) basis according to the following formula:

$$\widehat{H}(f_{h,x}, f_{h,y}) = \sum_{i=1}^{N} SA_i \left( \frac{f_x}{\lambda F}, \frac{f_y}{\lambda F}, \frac{f_z}{\lambda F} \right) \exp\left( j2\pi \left( s_x f_{h,x} + s_y f_{h,y} + s_z \sqrt{\lambda^{-2} - f_{h,x}^2 - f_{h,y}^2} \right) \right),$$

where:

$\mathcal{R}_h = (O; \vec{x_h}, \vec{y_h}, \vec{z_h})$ denotes a local reference frame of the hologram whose origin is located at the centre of the hologram H, whose axes defined by $\vec{x_h}$ and $\vec{y_h}$ coincide with the horizontal and vertical axes of the hologram, respectively, and whose axis defined by $\vec{z_h}$ coincides with the optical axis of the hologram. Let's note

$$\vec{x_h} = \begin{pmatrix} x_{h0} \\ x_{h1} \\ x_{h2} \end{pmatrix}, \ \vec{y_h} = \begin{pmatrix} y_{h0} \\ y_{h1} \\ y_{h2} \end{pmatrix} \text{ and } \vec{z_h} = \begin{pmatrix} z_{h0} \\ z_{h1} \\ z_{h2} \end{pmatrix}.$$

$$F = \max(f_x, f_y, f_z),$$

$$\begin{pmatrix} s_x \\ s_y \\ s_z \end{pmatrix} = \begin{bmatrix} x_{h0} & x_{h1} & x_{h2} \\ y_{h0} & y_{h1} & y_{h2} \\ z_{h0} & z_{h1} & z_{h2} \end{bmatrix} \begin{pmatrix} x_i - x_0 \\ y_i - y_0 \\ z_i - z_0 \end{pmatrix}$$ denotes the position of the centre of the object *Obi* in the reference frame $\mathcal{R}_h$

$$\begin{pmatrix} f_x \\ f_y \\ f_z \end{pmatrix} = \begin{bmatrix} x_{h0} & y_{h0} & z_{h0} \\ x_{h1} & y_{h1} & z_{h1} \\ x_{h2} & y_{h2} & z_{h2} \end{bmatrix} \begin{pmatrix} f_{h,x} \\ f_{h,y} \\ \sqrt{\lambda^{-2} - f_{h,x}^2 - f_{h,y}^2} \end{pmatrix}$$ denotes the frequency coordinates of the angular spectrum of the hologram in the reference frame (Ri) of the object Obi.

11. A device (100, 100') for generating a digital hologram (H) representative of a 3D scene comprising at least one object (Obi), said device comprising a processor that is configured for:

On a per-object basis, calculating an "omnidirectional" angular spectrum corresponding to the plane-wave decomposition of the light field emitted by an object of the scene at the surface of a geometric solid centred on said object, a surface of said solid being sampled according to a predetermined grid, the calculation associating a sample of the grid to a frequency vector (f = $(f_x, f_y, f_z)$) and to an amplitude corresponding to a sum of contributions to the light field of points of the object along a direction equal to that of the frequency vector;
For the scene:

- Obtaining a pose ($P_U$) of an observer (U);
- Deriving the hologram (H) of the scene as a function of the pose obtained from the "omnidirectional" angular spectra (SAi) calculated on a per-object basis;

**characterised in that** it is further configured for, during the calculation of an angular spectrum of the light field on a per-object-of-the-scene basis, for a plurality of predetermined viewing directions:

- on a per-viewing-direction (Vj) basis:

  ∘ determining a sub-set of non-occulted points of the object;
  ∘ calculating an angular sub-spectrum of the light field emitted by the points of the sub-set; and

- summing over the plurality of predetermined angular directions the amplitudes of the calculated angular sub-spectra, associated with a same sample of the grid.

12. A holographic rendering system (SRH, SRH') comprising a module for obtaining a three-dimensional scene comprising at least one object, a module for obtaining an observer's pose, and a holographic screen (SLM) adapted to render a hologram, **characterised in that** the system further comprises a device (100, 100') for generating the hologram according to claim **11**.

13. A holographic rendering system (SRH, SRH') according to claim **12, characterised in that** it comprises a head-mounted display intended to be worn near the eyes of the observer (U), said head-mounted display comprising a storage module (M1) adapted for the storage of the omnidirectional angular spectrum pre-calculated for the at least one object of the scene.

14. A computer program (Pg1) including instructions for implementing the method for calculating a digital hologram according to any one of claims **1** to **10,** when said program is executed by a processor.

15. A recording medium, readable by a processor, on which is recorded a computer program comprising program code instructions for executing the steps of the method according to one of claims **1** to **10.**

FIG. 1

FIG. 2

FIG. 3

FIG. 5A

FIG. 4

$V_2 = (1, 0, 0)$

$V_1 = (1, 0, -1)$

$V_3 = (1, 0, 1)$

$V_{1,x}x + V_{1,y}y + V_{1,z}z > 0$

ZV1

$x$

$y$ $z$

$V_8 = (0, 0, -1)$

$V_4 = (0, 0, 1)$

$V_5 = (-1, 0, 1)$

$V_7 = (-1, 0, -1)$

$V_6 = (-1, 0, 0)$

FIG. 5B

$V_1 = (1, 0, -1)$

$V_2 = (1, 0, 0)$

$V_3 = (1, 0, 1)$

$V_{1,x}x + V_{1,y}y + V_{1,z}z > 0$

ZV1

$x$

$y$ $z$

$V_8 = (0, 0, -1)$

$V_4 = (0, 0, 1)$

$V_7 = (-1, 0, -1)$

$V_5 = (-1, 0, 1)$

$V_6 = (-1, 0, 0)$

FIG. 5C

FIG. 6

$$V_j = +\vec{z} = (0, 0, 1)$$

FIG. 7

$$(x_k, y_k, z_k)$$

$$V_j = +\vec{z} = (0, 0, 1)$$

FIG. 8

FIG. 9

FIG. 10

FIG. 11

FIG. 12

FIG. 13

## RÉFÉRENCES CITÉES DANS LA DESCRIPTION

**Documents brevets cités dans la description**

- US 20160231706 A1

- US 20160231706 A

**Littérature non-brevet citée dans la description**

- **YUSUKE SANDO et al.** Hidden surface removal of computer-generated holograms for arbitrary diffraction directions. *Applied Optics,* vol. 52 (20), 4871-4876